Europäisches Patentamt

European Patent Office

Office européen des brevets

(19)

(11) Publication number: **0 331 820**
**A1**

# EUROPEAN PATENT APPLICATION

(21) Application number: 88203026.5

(22) Date of filing: 27.12.88

(51) Int. Cl.⁴: **A23L 1/217 , A23L 1/164**

The title of the invention has been amended (Guidelines for Examination in the EPO, A-III, 7.3).

(30) Priority: 15.01.88 NL 8800087

(43) Date of publication of application:
13.09.89 Bulletin 89/37

(84) Designated Contracting States:
AT BE CH DE ES FR GB GR IT LI LU NL SE

(71) Applicant: PRESERVENBEDRIJF B.V.
Ettensebaan 10
NL-4814 NN Breda(NL)

(72) Inventor: van Kranenburg, Simon
Kleibergsestraat 28
NL-4266 GC Eethen(NL)
Inventor: Roelands, Adrianus Cornelis
Vogelbos 67
NL-4841 EN Prinsenbeek(NL)

(74) Representative: Baarslag, Aldert D. et al
Nederlandsch Octrooibureau
Scheveningseweg 82 P.O. Box 29720
NL-2502 LS 's-Gravenhage(NL)

(54) Method for preparing expanded crunchy snacks or a semimanufactured product therefor.

(57) The present invention relates to the preparation of expanded crunchy snacks or a semimanufactured product therefor, in which a starch, optionally pasted starch, dried vegetables and/or fruits and a small quantity of a nontoxic salt are mixed to form a dough, the dough is extruded and the extruded product is cut into small pieces, the small pieces are dried at moderate temperature and the semimanufactured product thus obtained is expanded if required. The obtained crunchy products have good organoleptic properties and storage properties and have a low fat content, especially when the dried products are expanded with hot air or with microwaves.

EP 0 331 820 A1

**Method for preparing expanded crunchy snacks or a semimanufactured product therefor, in which a dried starch product and/or a completely or partially pasted starch product and a small quantity of a nontoxic salt are mixed to form a dough, the dough is extruded and the extruded product is cut into small pieces, the small pieces are dried at moderate temperature and the semimanufactured product thus obtained is expanded if required.**

The invention relates to a method for preparing expanded crunchy snacks or a semimanufactured product therefor, in which a dried starch product and/or a completely or partially pasted starch product and a small quantity of a nontoxic salt are mixed to form a dough, the dough is extruded and the extruded product is cut into small pieces, the small pieces are dried at moderate temperature and the semimanufactured product thus obtained is expanded if required.

Such a method is known from the Dutch Patent Specification 159,000 which describes a dough, the dry substance of which consists of 20 to 80% potato powder, granules or flakes, 20-80% of nonpasted starch and 0.5-3.5% common salt. The dough may also contain 2 to 20% prepasted starch calculated for the dry substance.

From the US Patent Specification 3,753,735, a method is known in which a snack is described which is prepared by mixing 50 to 70 parts by weight of a potato material consisting of 50 to 100% blanched ground dried potatoes in the form of potato flour and having a reducing sugars content of approximately 2 to 4% calculated for the dry substance and 0 to 50% by weight of a dried potato material of low quality having a modified rehydration factor of less than 7, with 30 to 50 parts by weight of a dried, prepasted starch in a quantity such that a potato flour mixture having a reducing sugars content of 1 to 2% by weight, calculated for the dry weight, and a modified hydration factor of 8.5 to 15 is obtained, the potato flour mixture being mixed with water and salt to form an extrudable mixture having a moisture content of 28 to 35%, said mixture being extruded under pressure and cut into small pieces, the small pieces being dried to a moisture content of 6 to 10% and the small pieces being deep-fried.

Dutch Patent Specification 159,000 gives the choice of a particular composition of the dry substance as a solution to the problem of the loss of shape of the extruded product. According to said Patent Specification, the dry substance is composed of 20-80% by weight of potato powder, granules or flakes, 20 to 80% by weight of nonpasted starch and 0.5-3.5% by weight of salt.

From the Canadian Patent Specification 911,806, a method is known for preparing crunchy, expanded snacks, in which potatoes are ground, in the presence of a bleaching agent, to form a liquid suspension to which 25 to 70 parts by weight of crude starch are added per 100 parts by weight of suspension to obtain a liquid mixture having a solid substance content of 35 to 50% by weight. Said liquid mixture is dried in a tumble drier to form a powder having a moisture content of less than 10% by weight, the powder is ground to a flour and the reducing sugars content is adjusted to 1 to 2% by weight. The flour is mixed with water and salt to form an extrudable mixture with a moisture content of 28 to 50% by weight and said mixture is extruded under pressure and cut into small pieces. These small pieces are dried to a moisture content of 6 to 10% by weight and deep-fried.

Such products are generally deep-fried in order to achieve an expansion, although in principle an expansion is also possible using a salt bed or with microwaves, optionally in vacuo. A disadvantage of the deep-fried products is that they generally have a fairly high fat content (15-30) % by weight.

It has now been found that a tasty snack with a high content of high-quality nutrient substances can be prepared, in particular, from vegetable and/or fruit by preparing, in a method of the type described in the introduction, a dough whose dry substance contains 25.5-96% by weight of optionally pasted starch, 0-4.5% by weight of common salt and/or potassium chloride, and 4-70% by weight of dried vegetable and/or dried fruit and/or fruit concentrate, calculated for the dry substance.

This product cannot be expanded in the usual manner by deep-frying. Deep-frying results in undesirable organoleptic properties and in an unfavourable colour (brown) as a result of the so-called Maillard reaction. The odour and taste are seriously impaired and, in addition, undesirable colour and taste formation occurs. It has now been found that both expanding with hot air and with microwaves, which generally do not yield satisfactory results in the prior art, are, on the contrary, highly suitable for the method according to the invention. At the same time, odour and taste are excellently maintained. According to a preferably used embodiment, the product obtained is expanded with the aid of hot air, then sprayed with edible oils and/or fats, after which the product is optionally sprinkled with a mixture of spices and/or other flavourings.

This method makes it possible to make use of oils having a high content of polyunsaturated fatty acids. Under normal deep-frying conditions, these oils are unstable because oxidation and polymerization occur. For this reason, saturated oil was in fact used in deep-frying which partially remained behind on the expanded product.

It is further pointed out that salts are present in vegetable and the dough will therefore contain salts even without adding salt. The quantity of salt to be added is chosen in such a manner that, together with the quantity of salt already present, a required salt content is obtained.

Here vegetable is understood to mean, inter alia, leaf vegetables, tuberous plants, pulses and vegetable concentrates. Fruit is understood to mean fruit powders and fruit concentrates.

Examples of suitable oils for use according to the method are palm oil, soya oil, maize oil, sunflower oil, safflower oil and peanut oil.

Flavourings which can be added are garden herbs, paprika, onions, cheese etc.

Suitable starches for use in the method according to the invention are, for example, potato, maize and tapioca starch, flours (finely sifted flours), of grains such as wheat, barley, rye and rice. Products containing starch such as potato puree powder and potato flake granulates and maize flour can also be used.

Any suitable, nontoxic salt can be used as a salt. Obviously, sodium chloride is primarily suitable, but potassium chloride and other combinations containing nontoxic nutrient salts are possible.

In choosing the starch to be used, those skilled in the art know how to choose a starch. Depending on the nature of the starch, an optionally partially pasted starch product has to be added. If a so-called "cooker extruder" is used, native starches, which are usually difficult to expand, can also be used. In such an appliance, however, pasting occurs, as a result of which the final expansion improves. Normal extrusion conditions for such an appliance are an extrusion temperature of 70-150°C (in the cooker zone) and an exit temperature of 70 to 100°C.

It is pointed out that both in a standard extrusion appliance and in a cooker extruder, an excessively low exit temperature cannot be used because a good plastic mixture is not then obtained.

The components to be used according to the invention may expediently be mixed in a powder mixer. The mixing time is approximately 5 minutes at a speed of 45 rev per minute. The moisture content is 15 to 50% by weight, preferably 25 to 35% by weight.

The mixtures can be extruded in a standard appliance. In the Examples, a Lalesse all-purpose extruder is used. The exit temperature of the product is expediently approximately 45-55°C, for example 50°C.

The extruded cut shapes are dried at a moderate temperature of, for example, 50°C for, for example, 10 hours. The moisture of the product is then 7 to 12% by weight, preferably 9 to 10% by weight.

The dried products may be expanded with the aid of hot air. The air temperature is 140-300°C and the expansion time 20 to 100 seconds. The air temperature is preferably 180 to 210°C and expansion is allowed for 40-60 seconds, followed by an after-drying cycle to a moisture content of 1-7% by weight, preferably 2.5-3.3% by weight. Expediently, the expansion is carried out in a hot-air fluidized-bed drier. In practice, the after-drying requires, for example, 3 minutes at 90°C.

Example I

A product with the following composition was prepared in the manner described above:

| Pasted potato starch | 1200 g |
|---|---|
| Spinach powder | 65 g |
| Carrot powder | 52 g |
| Celeriac powder | 103 g |
| Onion powder | 13 g |
| Garlic powder | 13 g |
| Auxiliary substances | 39 g |
| Common salt | 48 g |
| Water | 435 g |

Soya flour, lecithin and emulsifier are used as auxiliary substances. The quantity of these components is adjusted to obtain the desired effect and the type of starch.

Example II

A product with a single vegetable was also prepared:

3

| Pasted potato starch | 1200 g |
|---|---|
| Celeriac powder | 386 g |
| Auxiliary substances | 39 g |
| Common salt | 48 g |
| Water | 435 g |

After expansion for 50 seconds at 195°C and after-drying for 5 minutes at 90°C, the products were crunchy and had good organoleptic properties and storage properties.

Example III

| Pasted potato starch | 1200 g |
|---|---|
| Lentil powder | 450 g |
| Auxiliary substances | 39 g |
| Common salt | 48 g |
| Water | 600 g |

The lentil powder used is prepared by soaking, steaming, drying and grinding lentils.

Example IV

| Pasted potato starch | 1080 g |
|---|---|
| Celeriac powder | 193 g |
| Native maize starch | 120 g |
| Common salt | 48 g |
| Technical auxiliary substances | 39 g |
| Monosodium glutamate | 205 g |
| Water | 435 g |

The products of the Examples III and IV were prepared in the same way as in Example II. The same properties were obtained.

**Claims**

1. Method for preparing expanded crunchy snacks or a semimanufactured product therefor, in which a dried starch and/or a completely or partially pasted starch product and a small quantity of a nontoxic salt are mixed to form a dough, the dough is extruded and the extruded product is cut into small pieces, dried at moderate temperature and the semimanufactured product thus obtained is expanded if required, characterized in that a dough is prepared, the dry substance of which contains 25.5 to 96% by weight of optionally pasted starch, 0 to 4.5% by weight of common salt and/or potassium chloride and 4 to 70% by weight of dried vegetables and/or fruits, calculated for the dry substance.

2. Method according to Claim 1, characterized in that the dried vegetable and/or fruit concentrates are used in a quantity of 10 to 30% by weight.

3. Method according to Claim 1 or 2, characterized in that the product obtained is expanded with hot air.

4. Method according to Claim 1-3, characterized in that 10 to 15% by weight of one or more oils is applied to the product and spices and/or flavourings are then added.

5. Extruded product obtained according to the method of Claim 1-4.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 299 820 (TOM'S FOOD) <br> * Claims 1,6,14; page 4, lines 20-24; page 7, lines 24-28; examples 1b,2b,3a * | 1-3,5 | A 23 L   1/217 <br> A 23 L   1/164 |
| Y | | 4 | |
| X | US-A-3 705 812 (J. SHIELDS) <br> * Claims 1-7; column 4, lines 5-14 * | 1,2,5 | |
| X | GB-A-1 142 460 (GENERAL MILLS) <br> * Claims 1-11; page 2, lines 9-17 * | 1,5 | |
| X | CH-A- 497 143 (DEUTSCHE MAIZENA WERKE) <br> * Claim 1; column 3, lines 8-22; examples 4,7 * | 1 | |
| Y | FR-A-2 360 227 (S. ABE) <br> * Claim 1; example II * | 4 | |
| Y | FR-A-2 321 850 (GENERAL MILLS) <br> * Claim 1; page 1, lines 36-37; example II * | 4 | TECHNICAL FIELDS SEARCHED (Int. Cl.4) <br><br> A 23 L |

The present search report has been drawn up for all claims

| Place of search | Date of completion of the search | Examiner |
|---|---|---|
| THE HAGUE | 24-04-1989 | DESMEDT G.R.A. |